# EUROPEAN PATENT APPLICATION

(11) **EP 4 597 294 A1**
(43) Date of publication of application: **06.08.2025**
(21) Application number: 25154408.6
(22) Date of filing: 28.01.2025
(51) Int. Cl.: G06F 3/12, G06F 3/048, G06F 9/451, H04N 1/00

(54) **INFORMATION PROCESSING APPARATUS AND METHOD OF CONTROLLING INFORMATION PROCESSING APPARATUS**

(30) Priority: 01.02.2024 JP 2024014310
(71) Applicant: Sharp Kabushiki Kaisha, Sakai City, Osaka 590-8522 (JP)
(72) Inventor: MIYANO, Yasuhiro, 590-8522 Sakai City, Osaka (JP)
(74) Representative: Müller Hoffmann & Partner

(57) **Abstract**

An information processing apparatus including one or more controllers, a display, and an operation acceptor. The one or more controllers perform an initial setting process in which at a time of initial startup, a setting screen in a wizard form to receive a setting of a setting value is displayed on the display and an operation performed to set the setting value is received via the operation acceptor, and an update setting process in which when a predetermined condition after the initial startup is satisfied, the setting screen is displayed on the display and an operation performed to update the setting value is received via the operation acceptor.

## Description

### BACKGROUND OF THE INVENTION

### Field of the Invention

The present disclosure relates to an information processing apparatus and the like. This application claims the benefit of priority from Japanese Patent Application No. 2024-14310 filed February 1, 2024, the entire contents of which are incorporated herein by reference.

### Description of the Background Art

Some information processing apparatuses such as a multifunction peripheral/printer (MFP) and an image forming apparatus display an initial setting screen when the power is turned on for the first time after factory shipment. Initial setting screens of this type include an initial setting screen in a wizard form. A setting screen in a wizard form is a setting screen that presents a setting item in a dialog form to an operator and prompts the operator to input a setting value for the setting item. The initial setting screen in a wizard form is hereinafter referred to as an initial setting wizard.

A conventional initial setting wizard is displayed only once when the power is turned on for the first time after factory shipment. For example, in Patent Document 1, a setting for an apparatus is performed at the time of initial startup of the apparatus to allow a user to easily and completely perform the setting.

An object of the present disclosure is to provide an information processing apparatus and the like capable of, for example, displaying a setting screen with an appropriate content at an appropriate timing.

### PRIOR ART DOCUMENT

### PATENT DOCUMENT

Patent Document 1: Japanese Unexamined Patent Application Publication No. 2015-156206

### SUMMARY OF THE INVENTION

The present disclosure provides an information processing apparatus including: one or more controllers; a display; and an operation acceptor, wherein the one or more controllers perform an initial setting process in which at a time of initial startup, a setting screen in a wizard form to receive a setting of a setting value is displayed on the display and an operation performed to set the setting value is received via the operation acceptor, and an update setting process in which when a predetermined condition after the initial startup is satisfied, the setting screen is displayed on the display and an operation performed to update the setting value is received via the operation acceptor.

Furthermore, the present disclosure provides a method of controlling an information processing apparatus, the method including: an initial setting process in which at a time of initial startup, a setting screen in a wizard form to receive a setting of a setting value is displayed on a display and an operation performed to set the setting value is received; and an update setting process in which when a predetermined condition after the initial startup is satisfied, the setting screen is displayed and an operation performed to update the setting value is received.

The present disclosure provides an information processing apparatus capable of displaying an initial setting wizard at a timing other than the timing at which the power is turned on for the first time after factory shipment.

### BRIEF DESCRIPTION OF THE DRAWINGS

FIG. 1 is a perspective view of an external appearance of a multifunction peripheral according to a first embodiment of the present disclosure.
FIG. 2 is a block diagram of the multifunction peripheral according to the first embodiment of the present disclosure.
FIG. 3 is a diagram showing an example of an initial state of a state management table used in the first embodiment of the present disclosure.
FIG. 4 is a diagram showing an example of an initial state of a display management table used in the first embodiment of the present disclosure.
FIG. 5 is a diagram showing an example of a display complete state of the display management table used in the first embodiment of the present disclosure.
FIG. 6 is a diagram showing a main body security mode selectable in the multifunction peripheral according to the first embodiment of the present disclosure.
FIG. 7 is a flowchart illustrating an initial setting wizard display process performed by the multifunction peripheral according to the first embodiment of the present disclosure.
FIG. 8 is a flowchart illustrating an operation performed at the time of startup (at the time of power-on/at the time of restart) of a main body of the multifunction peripheral according to the first embodiment of the present disclosure.
FIG. 9 is a flowchart illustrating an initial setting wizard initialization process performed by the multifunction peripheral according to the first embodiment of the present disclosure.
FIG. 10 is a flowchart illustrating a main body firmware update process performed by the multifunction peripheral according to the first embodiment of the present disclosure.
FIG. 11 is a flowchart illustrating an operation that is performed by a multifunction peripheral according to a second embodiment of the present disclosure and in which an initial setting wizard is initialized according to initialization of a specific setting.
FIG. 12 is a flowchart illustrating an operation that is performed by a multifunction peripheral according to a third embodiment of the present disclosure and in which the initial setting wizard is initialized according to a change in the main body security mode.
FIG. 13 is a flowchart illustrating an operation performed by a multifunction peripheral according to a fourth embodiment of the present disclosure when the main body security mode is changed.
FIG. 14 is a flowchart illustrating an operation performed by the multifunction peripheral according to the fourth embodiment of the present disclosure when a specific setting is initialized.
FIG. 15 is a flowchart illustrating an initial setting wizard initialization process performed by a multifunction peripheral according to a fifth embodiment of the present disclosure.
FIG. 16 is a diagram showing a screen configuration of the initial setting wizard displayed in the multifunction peripheral according to the fifth embodiment of the present disclosure.
FIG. 17 is a diagram showing an example of a state of the display management table used in the multifunction peripheral according to the fifth embodiment of the present disclosure and showing a state of the display management table after the initial setting wizard is displayed when the power is turned on for the first time after factory shipment.
FIG. 18 is a diagram showing an example of a state of the display management table used in the multifunction peripheral according to the fifth embodiment of the present disclosure and showing a state of the display management table after the initial setting wizard initialization process in FIG. 15 is performed.
FIG. 19 is a flowchart illustrating a main body firmware update process performed by a multifunction peripheral according to a sixth embodiment of the present disclosure.
FIG. 20 is a diagram illustrating an example of an initial setting wizard advance notification screen displayed by the multifunction peripheral according to the sixth embodiment of the present disclosure.

### DESCRIPTION OF THE PREFERRED EMBODIMENTS

A general information processing apparatus has setting items (hereinafter referred to as initial setting items) for which the manufacturer desires a user to perform a setting or check initial values before the user starts using the apparatus after shipment.

The initial setting items include a basic setting item such as a language setting, a security-related item absolutely required to be set, a setting item for an advantageous function of the product, and the like. In order to allow a user to promptly and completely set the initial setting items, an initial setting wizard is typically displayed as an initial setting screen at the time of initial power-on of the product.

However, normally, after the setting on the initial setting wizard is performed once, the initial setting wizard is not displayed again unless the main body is completely initialized, and the manufacturer has limited chances to present the initial setting items to a user.

In general, information processing apparatuses have increasingly higher functionality, in particular, higher information security requirements. Thus, in some cases, in an information processing apparatus currently in operation, an update of a firmware or the like causes addition of a setting item that is not set on an initial setting screen or a change in setting items later. Examples of such a setting item added or changed later include a setting item related to authentication and a setting item for a safe network connection.

Thus, if a setting in an initial setting wizard is performed only at the time of initial startup of an information processing apparatus, the information processing apparatus is continuously used without being adequately set.

An information processing apparatus for solving one or more problems will be described in the following embodiments. In the following embodiments, the information processing apparatus of the present disclosure is applied to an image forming apparatus. The following embodiments are examples of the present disclosure, and the technical scope of the present disclosure is not limited to the description of the following embodiments.

### 1. First Embodiment

### 1.1 Hardware Configuration of Multifunction Peripheral

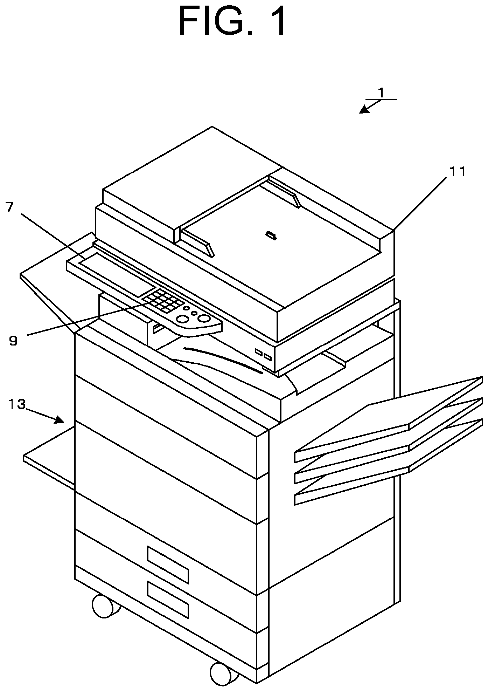

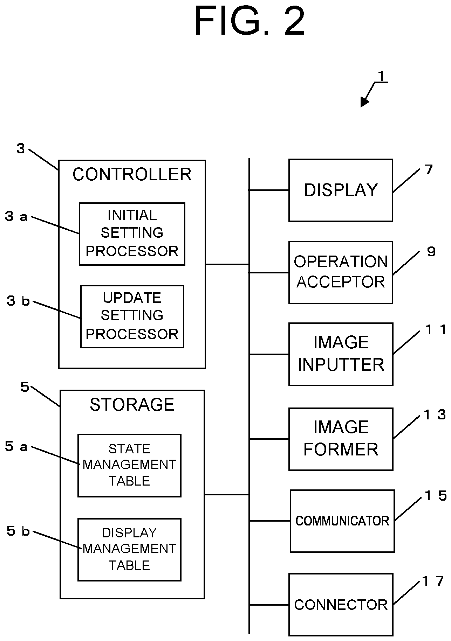

FIG. 1 is a perspective view of an external appearance of a multifunction peripheral 1 according to a first embodiment of the present disclosure. FIG. 2 is a block diagram of the multifunction peripheral 1 according to the first embodiment of the present disclosure. The multifunction peripheral 1 is a type of image forming apparatus. A multifunction peripheral/printer is also referred to as an MFP, and has a plurality of functions, typically a copy function, an image scanner function, a facsimile function, a printer function, and the like. The multifunction peripheral 1 may further have other functions, for example, an electronic mail transmission and reception function, a file server function, and the like. The multifunction peripheral 1 includes a controller 3, a storage 5, a display 7, an operation acceptor 9, an image inputter 11, an image former 13, a communicator 15, and a connector 17.

As illustrated in FIG. 1, in the multifunction peripheral 1, image data is generated from a document read by the image inputter 11, and the image former 13 forms an image on a recording medium (e.g., recording paper) fed from a paper feeder. In the multifunction peripheral 1, a user can operate the operation acceptor 9 to set, for example, the number of prints and the state of an image to be generated. Furthermore, in the multifunction peripheral 1, for example, at the time of power-on or under a specific condition, an initial setting wizard is displayed on the display 7.

The display 7 and the operation acceptor 9 may be integrally formed as a touch panel device or the like. A user can operate software keys displayed on the display 7 to allow the multifunction peripheral 1 to receive an operation input from the user.

The controller 3 controls the entire multifunction peripheral 1. The controller 3 is composed of one or more control apparatuses or control circuits, for example, a central processing unit (CPU) that is a processor that executes various types of arithmetic processing, a system on a chip (SoC), or the like.

The controller 3 reads a program stored in the storage 5 and executes processing to implement each function. The controller 3 may read and execute a program stored in the storage 5 to function as an initial setting processor 3a and an update setting processor 3b.

The initial setting processor 3a performs a process in which when the power to the multifunction peripheral 1 is turned on for the first time after factory shipment, a setting screen in a wizard form to receive a setting of a setting value is displayed on the display 13 and an operation performed to set the setting value is received via the operation acceptor 15.

The update setting processor 3b performs a process in which when a predetermined condition (specific condition) is satisfied after the power to the multifunction peripheral 1 is turned on for the first time after factory shipment, a setting screen is displayed on the display 13 and an operation performed to update the setting value is received via the operation acceptor 15.

The storage 5 stores various programs and data required to operate the multifunction peripheral 1. The storage 5 includes one or more recording devices capable of performing transitory storage, such as a dynamic random-access memory (DRAM), and/or one or more non-transitory recording devices such as a solid-state drive (SSD) composed of a semiconductor memory and a hard disk drive (HDD) composed of a magnetic disk. The storage 5 is configured as a single component for convenience of description; however, the storage 5 may be configured as separate devices for different uses such as an area (primary storage area) used to execute a program, an area (auxiliary storage area) used to store a program and data, and an area used as a cache. The storage 5 stores, in particular, a state management table 5a and a display management table 5b. Furthermore, the storage 5 stores setting values for various setting items including an initial setting item. The state management table 5a and the display management table 5b will be described in detail below.

The display 7 displays an image and a character. The display 7 is composed of, for example, a liquid crystal display (LCD), an organic electroluminescence (EL) panel, or the like. The display 7 may be a single display device, or may further include an externally connected display device.

The operation acceptor 9 receives an operation input from a user. The operation acceptor 9 is composed of, for example, hardware keys and/or software keys. The operation acceptor 9 includes operation keys such as a task key for providing instructions to perform a task such as fax transmission or image reading and a stop key for providing instructions to stop an operation.

The image inputter 11 reads an image (document), and outputs the image as image data. The image inputter 11 is composed of a common scanner (image input device). The image inputter 11 may input image data from an external storage medium such as a USB memory, or may receive an image via a network.

The image former 13 forms (prints), based on image data, an image on a medium such as copy paper. The image former 13 may use any printing method, and may be, for example, any of an inkjet printer, a laser printer, a thermal transfer printer, and the like. The image former 13 may be a monochrome printer or a color printer. The image former 13 may include a paper feed mechanism that supplies a medium, a transport mechanism that transports a medium, a sorter mechanism that sorts a medium on which an image has been formed, and the like.

The communicator 15 is connected to a network. The communicator 15 is composed of, for example, an interface that is connectable to a wired local area network (LAN), a wireless LAN, or a long-term evolution (LTE) network. The communicator 15 connected to a network allows the multifunction peripheral 1 to be connected to another device or an external network. Alternatively, the communicator 15 may be, for example, an interface that performs short-range wireless communication such as near field communication (NFC) or Bluetooth (registered trademark).

The connector 17 connects the multifunction peripheral 1 to another device. The connector 17 is, for example, a USB interface, to which a USB memory or the like is connected. The connector 17 may be an interface such as an HDMI (registered trademark), instead of a USB interface.

### 1.2 Table

### 1.2.1 State Management Table

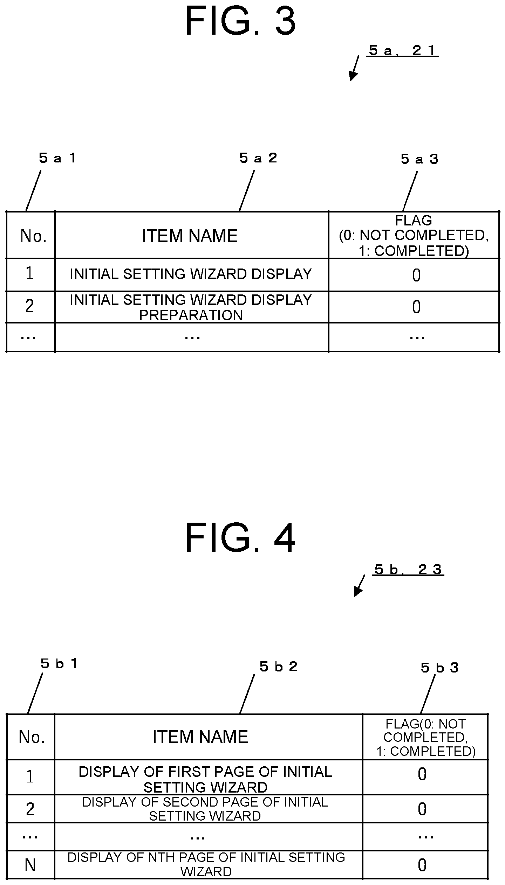

FIG. 3 is a diagram showing an example of an initial state of the state management table 5a used in the first embodiment of the present disclosure. The state management table 5a is a table that stores a flag indicating the state of the multifunction peripheral 1, and a state management table 21 is an example of the state management table 5a that stores values in the initial state. The state management table 5a (21) is composed of a flag number (flag No.) 5a1, an item name 5a2, and a flag value 5a3. The flag number 5a1 is an identification number that uniquely identifies a single record in the state management table 5a (21). The item name 5a2 is the name of an item indicated by the record. The flag value 5a3 represents the value of a flag. When the flag value 5a3 is 0, an item indicated by the corresponding item name 5a2 has not been performed, and when the flag value 5a3 is 1, an item indicated by the corresponding item name 5a2 has been performed. The state management table 21 indicates that an initial setting wizard display with the flag No. 1 has not been performed and an initial setting wizard display preparation with the flag No. 2 has not been performed.

The initial setting wizard includes a setting screen in a wizard form used to perform an initial setting. The setting screen in a wizard form is a setting screen in a dialog form. The setting screen in a wizard form is composed of one or more setting screens, and one or more setting items are displayed on each setting screen. Each setting screen includes an input field for receiving an input of a setting value to be set for a displayed setting item.

The initial setting wizard is displayed at the time of initial power-on (when the power is turned on for the first time). In the present embodiment, the initial setting wizard is also displayed again under a specific condition at a time other than the time of initial power-on. The display of the initial setting wizard performed again by the multifunction peripheral 1 under a specific condition is referred to as redisplay of the initial setting wizard.

The specific condition is assumed to be, for example, as follows.
· After the firmware of the main body is updated.
· After the security of the main body is changed.
· After a specific setting (initialization of administrator password, initialization of personal information) is performed.

One or more of these conditions may be used in combination. Detailed operation for the above conditions will be described in the following embodiments.

The initial setting wizard may be displayed in any of the following display modes.
· Mode in which all the setting items are displayed again as at the time of initial power-on.
· Mode in which one or some of the items (e.g., only a security-related item) are displayed again.

### 1.2.2 Display Management Table

FIG. 4 is a diagram showing an example of an initial state of the display management table used in the first embodiment of the present disclosure. The display management table 5b is a table that indicates whether each page of the initial setting wizard composed of N (N is a natural number) pages has been displayed, and a display management table 23 is an example of the display management table 5b that stores values in the initial state. A flag number 5b 1 is an identification number that uniquely identifies a single record in the display management table 23. An item name 5b2 indicates the page number of a page of the initial setting wizard. A flag value 5b3 represents the value of a flag. When the flag value 5b3 is 0, a page indicated by the corresponding item name 5b2 has not yet been displayed, and when the flag value 5b3 is 1, a page indicated by the corresponding item name 5b2 has been displayed. The display management table 23 indicates the initial state; thus, none of the pages of the initial setting wizard has yet been displayed, and the flag values 5b3 are all 0.

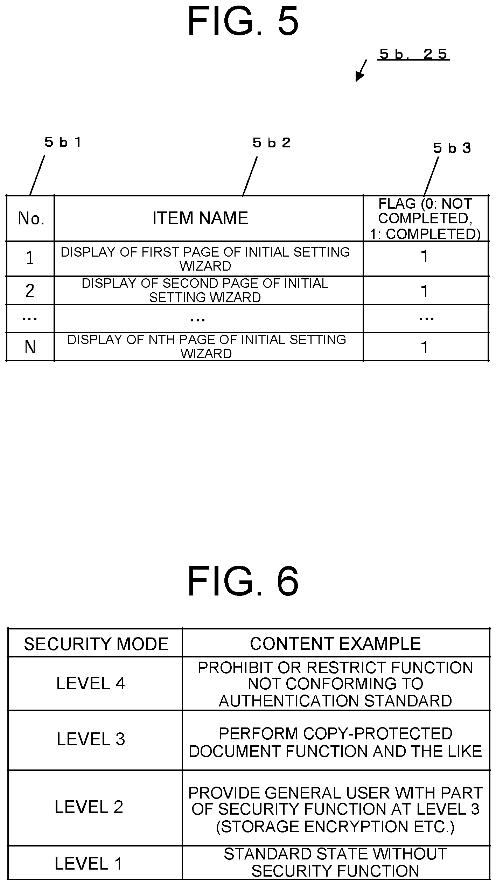

FIG. 5 is a diagram showing an example of a display complete state of the display management table used in the first embodiment of the present disclosure. A display management table 25 is an example of the display management table 5b after the initial setting wizard is displayed. Thus, in the display management table 25, the flag values 5b3 are all 1.

### 1.3 Security Mode

FIG. 6 is a diagram showing a main body security mode selectable in the multifunction peripheral 1 according to the first embodiment of the present disclosure. As shown in FIG. 6, the multifunction peripheral 1 has four levels of security mode: from level 1 to level 4. The security at level 1 is the lowest, and the security at level 4 is the highest. At level 4, the controller 3 prohibits or restricts the use of a function that does not conform to an authentication standard. The authentication standard is, for example, a Protection Profile for Hardcopy Devices (HCD PP) ver. 1.0. At level 3, the controller 3 performs a copy-protected document (document control) function and the like. The copy-protected document (document control) function is a function in which an embedded specific pattern (document control pattern) is printed on an important document, and when the document is input, the image forming apparatus detects the document control pattern and restricts an operation (secondary copy, fax transmission, document filing, etc.) performed for the document. At level 2, the controller 3 provides a general user with part of the security function at level 3 (e.g., storage encryption etc.). At level 1, the controller 3 is operated in a standard state without the security function.

A security mode at one of the levels from level 1 to level 4 is selected via the operation acceptor 9, and stored in the storage 5. The controller 3 is operated according to the security mode stored in the storage 5.

### 1.4 Process Flow

### 1.4.1 Initial Setting Wizard Display Process

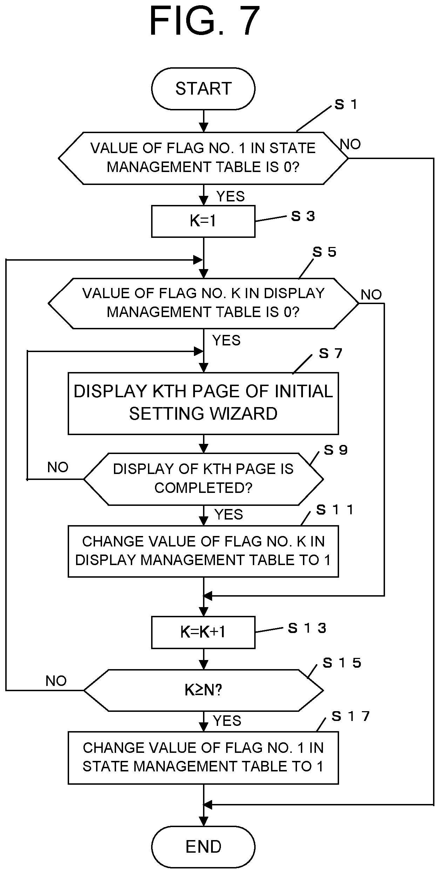

FIG. 7 is a flowchart illustrating an initial setting wizard display process performed by the multifunction peripheral 1 according to the first embodiment of the present disclosure. The initial setting wizard is composed of N (N is a natural number) pages (screens).

The controller 3 determines, referring to the state management table 5a stored in the storage 5, whether the flag value of the flag No. 1 is 0 (step S1). When the flag value is 1 (No in step S1), the controller 3 ends the process. When the flag value is 0 (Yes in step S1), the controller 3 assigns an initial value 1 to a variable K (step S3), and determines whether the flag value of a flag number K in the display management table 5b is 0 (step S5). When the flag value is 0 (Yes in step S5), the controller 3 displays the Kth page of the initial setting wizard using the display 7 (step S7). The controller 3 determines whether the display of the entire Kth page is completed (step S9), and when the display of the entire Kth page is not yet completed (No in step S9), the controller 3 displays a portion of the Kth page that has not been displayed. When the display of the entire Kth page is completed (Yes in step S9), the controller 3 changes, to 1, the flag value corresponding to the flag number K in the display management table 5b stored in the storage 5 (step S11), and adds 1 to the variable K (step S13). The controller 3 compares, with N, the variable K to which 1 has been added (step S15). When the variable K is less than N (No in step S15), the controller 3 causes the process to return to step S5. When the variable K is greater than or equal to N (Yes in step S15), the controller 3 changes, to 1, the flag value of the flag number 1 in the state management table 5a (step S17), and ends the process.

### 1.4.2 Startup Process

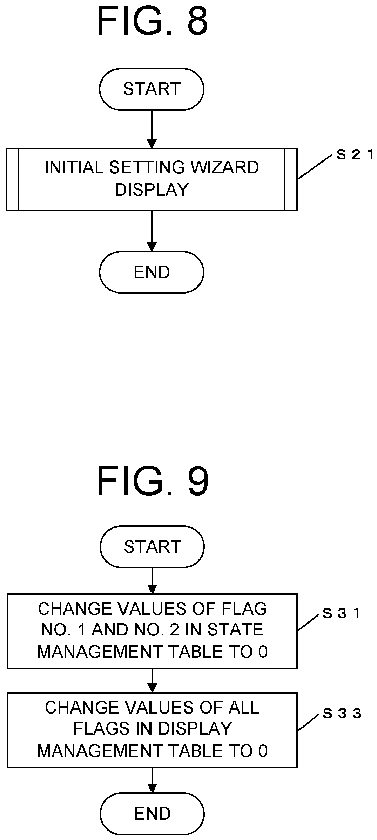

FIG. 8 is a flowchart illustrating a process performed at the time of startup (at the time of power-on/at the time of restart) of the main body of the multifunction peripheral 1 according to the first embodiment of the present disclosure. This operation is performed by the initial setting processor 3a. As illustrated in FIG. 8, when the multifunction peripheral 1 is changed from the power-off state to the power-on state and when the multifunction peripheral 1 is restarted, the controller 3 performs the initial setting wizard display process (step S21). The initial setting wizard display process is as described above. That is, each time the power to the multifunction peripheral 1 is turned on and each time the multifunction peripheral 1 is restarted, the controller 3 performs the initial setting wizard display process.

### 1.4.3 Initial Setting Wizard Initialization Process

FIG. 9 is a flowchart illustrating an initial setting wizard initialization process performed by the multifunction peripheral 1 according to the first embodiment of the present disclosure. In a conventional multifunction peripheral, an initial setting wizard is displayed only when the power is turned on for the first time after factory shipment. In contrast, in the multifunction peripheral 1 according to the present disclosure, the initial setting wizard is displayed when the power is turned on for the first time after factory shipment, and in addition, when a predetermined condition other than the above condition is satisfied (in the present embodiment, when the main body firmware is updated), the controller 3 performs the initial setting wizard initialization process described next to update the state management table 5a and the display management table 5b so that the initial setting wizard display process is performed again.

That is, the controller 3 changes, to 0, the flag values of the flag number 1 and the flag number 2 in the state management table 5a (21) stored in the storage 5 (step S31). Next, the controller 3 changes, to 0, the flag values of all the flags in the display management table 5b stored in the storage 5 (step S33).

### 1.4.4 Initial Setting Wizard Redisplay Process

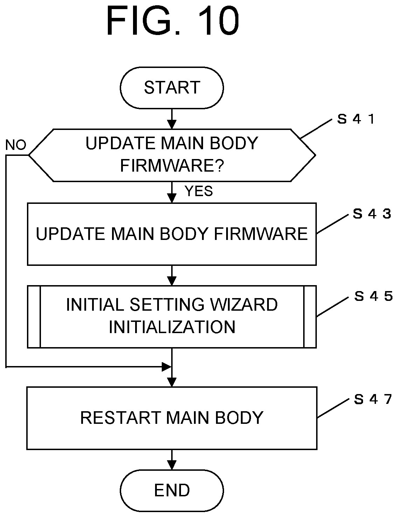

FIG. 10 is a flowchart illustrating a main body firmware update process performed by the multifunction peripheral 1 according to the first embodiment of the present disclosure. This operation is performed by the update setting processor 3b. The main body firmware is the firmware of the multifunction peripheral 1, and is stored in the storage 5.

The controller 3 determines whether to update the main body firmware (step S41). The main body firmware is determined to be updated, for example, when an operation to update the firmware of the multifunction peripheral 1 is received via the operation acceptor 9. Alternatively, the main body firmware may be updated when an update file for the main body firmware is received via the communicator 15 from a file server (not illustrated) that is located on the network and distributes the firmware of the multifunction peripheral 1, and then the update file is stored in the storage 5. Alternatively, the main body firmware may be updated when an update file for the main body firmware is copied from an external storage device connected to the connector 17 and is then stored in the storage 5.

Next, the controller 3 updates, based on the update file, the main body firmware stored in the storage 5 (step S43). Then, the controller 3 performs the initial setting wizard initialization process (step S45). The initial setting wizard initialization process is as described above with reference to FIG. 9. Then, the controller 3 restarts the main body (step S47). After the restart of the main body, the multifunction peripheral 1 is operated according to the main body firmware after the update.

When the main body is restarted, the initial setting wizard display process is performed as illustrated in FIG. 8. The initial setting wizard initialization process has been performed immediately before the initial setting wizard display process; thus, the flag value of the flag number 1 "initial setting wizard display" in the state management table 5a (21) is 0, and the flag values of all the flags in the display management table 5b (23) are 0. Therefore, although this is not the point at which the power to the multifunction peripheral 1 is turned on immediately after factory shipment, the controller 3 displays, on the display 7, the first to Nth pages of the initial setting wizard according to the flowchart in FIG. 7.

### 1.5 Effects

According to the first embodiment, the multifunction peripheral 1 displays the initial setting wizard not only when the power is turned on for the first time after factory shipment but also when the main body firmware is updated. This allows a user to check the setting content of the initial setting wizard and change the setting content as needed, not only when the power is turned on for the first time after factory shipment but also when the main body firmware is updated.

According to the first embodiment, when an update of the main body firmware causes an increase or decrease in the number of setting items in the initial setting wizard or causes a change in the setting items, a user can check the setting content of the initial setting wizard and change the setting content as needed, while considering the increase or decrease in the number of setting items or the change in the setting items.

In the multifunction peripheral 1 described above, the initial setting wizard conventionally displayed only at the time of initial power-on can also be displayed again under a specific condition. The initial setting wizard displayed again under a specific condition can cause or prompt a user to perform an effective setting. Depending on the condition, part of the initial setting wizard is displayed instead of the entire initial setting wizard, making it possible to cause or prompt a user to perform a more effective setting. By notifying a user in advance of the manner in which the initial setting wizard is displayed, confusion can be avoided.

Thus, the initial setting wizard displayed only at the time of initial power-on can also be displayed under a specific condition. The content of the initial setting wizard displayed at this time may not necessarily be the same as that of the initial setting wizard displayed at the time of initial power-on, and only part of the initial setting wizard may be displayed. This allows a user to more conveniently and efficiently perform a setting for the main body. By notifying a user in advance that the initial setting wizard is displayed in the above manner, the setting can be smoothly performed without confusion.

### 2. Second Embodiment

A second embodiment will be described. In the first embodiment, the initial setting wizard is displayed when the power is turned on for the first time after factory shipment and when the main body firmware is updated. In contrast, in the second embodiment, the initial setting wizard is displayed when the power is turned on for the first time after factory shipment and when a specific setting is initialized. A specific setting is, for example, a setting of the administrator password or a setting related to personal information on a registered user or the like. The following mainly describes only differences in configuration and process from those of the first embodiment.

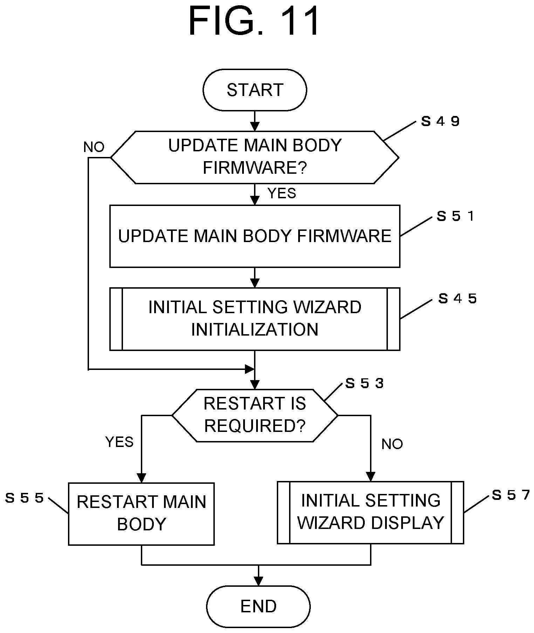

FIG. 11 is a flowchart illustrating an operation that is performed by the multifunction peripheral 1 according to the second embodiment of the present disclosure and in which the initial setting wizard is initialized according to initialization of a specific setting. When an instruction to initialize a specific setting such as a setting of the administrator password or a setting related to personal information such as information on a registered user is received via the operation acceptor 9 (Yes in step S49), the controller 3 initializes the specific setting (step S51), and performs the initial setting wizard initialization process described above (step S45). After the initial setting wizard initialization process is performed, the controller 3 determines whether a restart is required (step S53). A restart is determined to be required, for example, when the specific setting after the update includes a setting that is read only at the time of startup. In this case, a restart allows such a setting to be reflected in the operation of the multifunction peripheral 1.

When a restart is required (Yes in step S53), the controller 3 restarts the multifunction peripheral 1 (step S55). In this case, after the restart of the main body, the controller 3 is operated according to the flowchart in FIG. 8 and performs the initial setting wizard display (step S21). When no restart is required (No in step S53), the controller 3 performs the initial setting wizard display process (step S57), and ends the process.

That is, when a specific setting is initialized, the multifunction peripheral 1 may or may not be restarted; however, in either case, after the initial setting wizard initialization process is performed, the controller 3 performs the initial setting wizard display process. The initial setting wizard initialization process has been performed before the initial setting wizard display process; thus, at the time at which the initial setting wizard display process is performed, the flag value of the flag number 1 "initial setting wizard display" in the state management table 21 is 0, and the flag values of all the flags in the display management table 5b (23) are 0. Therefore, although this is not the point at which the power to the multifunction peripheral 1 is turned on immediately after factory shipment, the controller 3 displays, on the display 7, the first to Nth pages of the initial setting wizard in the initial setting wizard display process.

According to the second embodiment, when a specific setting is initialized, the multifunction peripheral 1 redisplays the initial setting wizard. This allows a user to check the setting content of the initial setting wizard and change the setting content as needed, not only when the power is turned on for the first time after factory shipment but also when a specific setting is initialized.

### 3. Third Embodiment

A third embodiment will be described. In the third embodiment, the initial setting wizard is displayed when the power is turned on for the first time after factory shipment and when the main body security mode is changed. As for the main body security mode, refer to "1.3 Security Mode" described above. The following mainly describes only differences in configuration and process from those of the first embodiment.

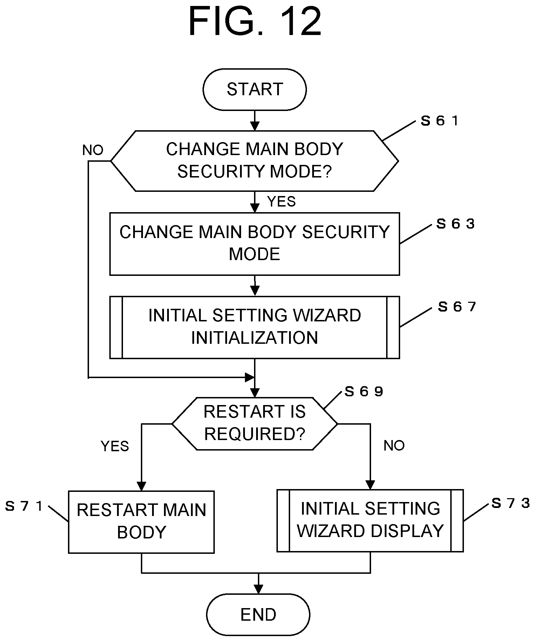

FIG. 12 is a flowchart illustrating an operation that is performed by the multifunction peripheral 1 according to the third embodiment of the present disclosure and in which the initial setting wizard is initialized according to a change in the main body security mode. When an instruction to change the main body security mode is received via the operation acceptor 9 (Yes in step S61), the controller 3 changes the main body security mode stored in the storage 5 (step S63), and performs the initial setting wizard initialization process described above (step S67). When no instruction to change the main body security mode is received via the operation acceptor 9 (No in step S61), the controller 3 causes the process to proceed to step S69 described next.

After the initial setting wizard initialization process is performed, the controller 3 determines whether a restart is required (step S69). As in step S47, a restart is determined to be required, for example, when the specific setting after the update includes a setting that is read only at the time of startup. When a restart is required (Yes in step S69), the controller 3 restarts the multifunction peripheral 1 (step S71). In this case, after the restart of the main body, the controller 3 is operated according to the flowchart in FIG. 8 and performs the initial setting wizard display (step S21). When no restart is required (No in step S69), the controller 3 performs the initial setting wizard display process (step S73), and ends the process.

That is, when the main body security mode is changed, the multifunction peripheral 1 may or may not be restarted; however, in either case, after the initial setting wizard initialization process is performed, the controller 3 performs the initial setting wizard display process.

According to the third embodiment, the initial setting wizard is displayed not only when the power is turned on for the first time after factory shipment but also when the main body security mode is changed. Thus, when the main body security mode is changed, it is possible to prompt, without delay, a user to recheck the setting items in the initial setting wizard.

### 4. Fourth Embodiment

A fourth embodiment will be described. In the fourth embodiment, the initial setting wizard is displayed when the power is turned on for the first time after factory shipment and when two conditions are satisfied. In the fourth embodiment, the two conditions are a combination of the condition under which the initial setting wizard is displayed in the second embodiment and the condition under which the initial setting wizard is displayed in the third embodiment. That is, the first condition is that the main body security mode has been changed, and the second condition is that a specific setting has been initialized. The following mainly describes only differences in configuration and process from those of the first embodiment.

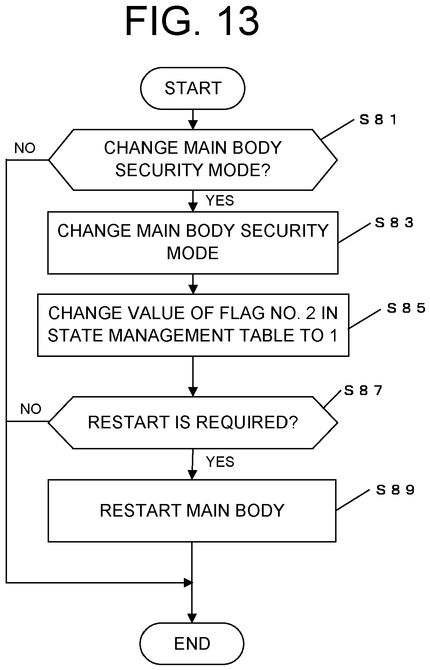

FIG. 13 is a flowchart illustrating an operation performed by the multifunction peripheral according to the fourth embodiment of the present disclosure when the main body security mode is changed. When an instruction to change the main body security mode is received via the operation acceptor 9 (Yes in step S81), the controller 3 changes the main body security mode stored in the storage 5 (step S83), and changes, to 1, the flag value of the flag number 2 in the state management table 5a (step S85). When no instruction to change the main body security mode is received via the operation acceptor 9 (No in step S81), the controller 3 ends the process.

Next, the controller 3 determines whether a restart is required (step S87). When a restart is required (Yes in step S87), the controller 3 restarts the multifunction peripheral 1 (step S89). In this case, after the restart of the main body, the controller 3 is operated according to the flowchart in FIG. 8 and performs the initial setting wizard display process (step S21), and ends the process. The initial setting wizard initialization process has not been performed so far. Thus, the flag value of the flag number 1 in the state management table 5a remains 1, which has been obtained by changing the flag value in step S17 in the initial setting wizard display process performed when the power is turned on for the first time after factory shipment. Therefore, in the initial setting wizard display process performed after the restart in step S89, the answer is determined to be "No" in step S1, and no initial setting wizard is displayed. When no restart is required (No in step S87), the controller 3 immediately ends the process.

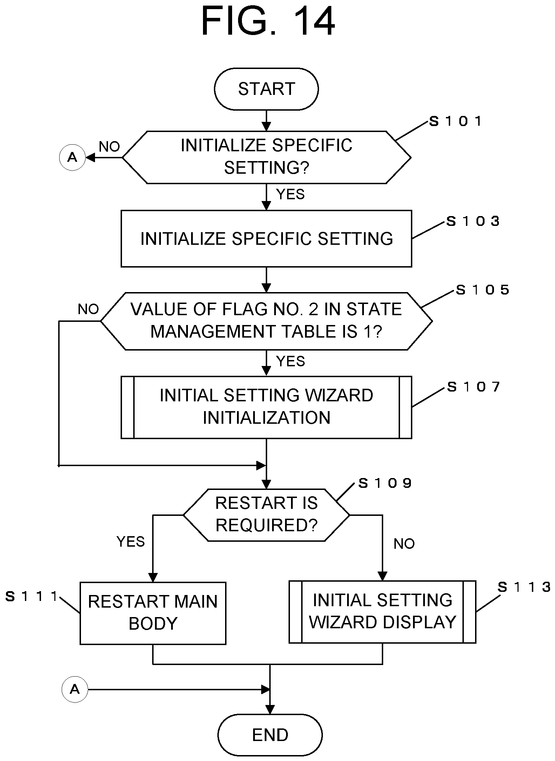

FIG. 14 is a flowchart illustrating an operation performed by the multifunction peripheral according to the fourth embodiment of the present disclosure when a specific setting is initialized. When an instruction to initialize a specific setting such as a setting of the administrator password or a setting related to personal information on a registered user or the like is received via the operation acceptor 9 (Yes in step S101), the controller 3 initializes the specific setting (step S103). When no instruction to initialize a specific setting is received via the operation acceptor 9 (No in step S101), the controller 3 immediately ends the process.

After the specific setting is initialized, the controller 3 determines whether the flag value of the flag number 2 in the state management table 5a is 1 (step S105). When the flag value of the flag number 2 is 1 (Yes in step S105), the controller 3 performs the initial setting wizard initialization process described above (step S107), and causes the process to proceed to step S109. When the flag value of the flag number 2 is not 1 (No in step S105), the controller 3 causes the process to immediately proceed to step S109 without performing the initial setting wizard initialization process. In step S109, the controller 3 determines whether a restart is required. When a restart is required (Yes in step S109), the controller 3 restarts the multifunction peripheral 1 (step S111). In this case, after the restart of the main body, the controller 3 is operated according to the flowchart in FIG. 8 and performs the initial setting wizard display (step S21). When no restart is required (No in step S109), the controller 3 performs the initial setting wizard display process (step S113), and ends the process.

When the operation in FIG. 14 is performed and the flag value of the flag number 2 in the state management table 5a is 1 (when a specific setting is initialized), the initial setting wizard initialization process is performed; thus, the flag value of the flag number 1 in the state management table 5a (21) at this time is 0. Therefore, regardless of the determination on whether a restart is required in step S109, the controller 3 displays, on the display 7, the initial setting wizard in the initial setting wizard display process subsequently performed (step S21 or step S113 after the restart).

According to the fourth embodiment, the multifunction peripheral 1 displays the initial setting wizard not only when the power is turned on for the first time after factory shipment but also when a specific setting is initialized after the main body security mode is changed. This allows a user to check the setting content of the initial setting wizard and change the setting content as needed, not only when the power is turned on for the first time after factory shipment but also when a specific setting is initialized after the main body security mode is changed.

### 5. Fifth Embodiment

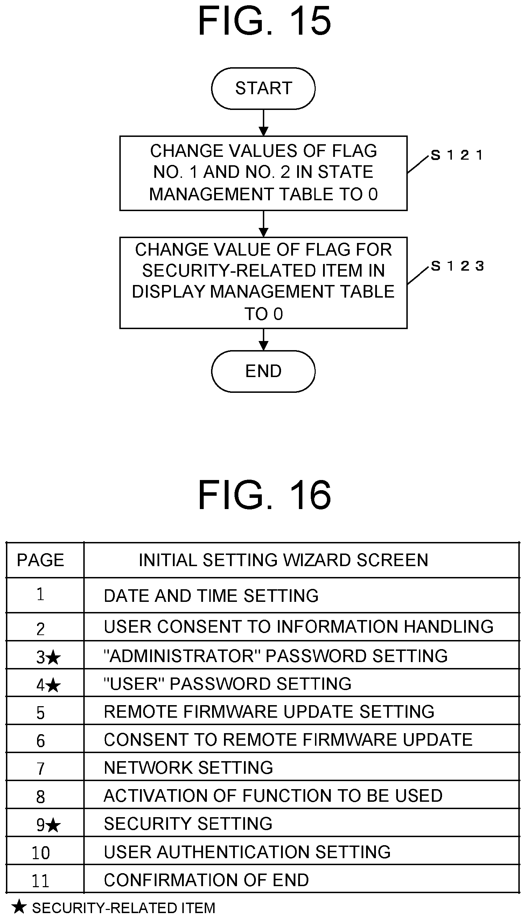

A fifth embodiment will be described. The following mainly describes only differences in configuration and process from those of the first embodiment. In the fifth embodiment, instead of the initial setting wizard initialization process in FIG. 9, an initial setting wizard initialization process in FIG. 15 is performed. In step S33 in FIG. 9, the flag values of all the flags in the display management table 5b are changed to 0. In contrast, in step S123 in FIG. 15 corresponding to step S33 in FIG. 9, the flag values of only one or some of the flags in the display management table 5b are changed to 0.

FIG. 15 is a flowchart illustrating the initial setting wizard initialization process performed by the multifunction peripheral according to the fifth embodiment of the present disclosure. The controller 3 changes, to 0, the flag values of the flag number 1 and the flag number 2 in the state management table 5a stored in the storage 5 (step S121). Next, the controller 3 changes, to 0, the flag value of a flag for a security-related item in the display management table 5b stored in the storage 5 (step S123).

FIG. 16 is a diagram showing a screen configuration of the initial setting wizard displayed in the multifunction peripheral according to the fifth embodiment of the present disclosure. As shown in FIG. 16, the initial setting wizard of the fifth embodiment is composed of 11 pages in total. Of these pages, the third page ("administrator" password setting), the fourth page ("user" password setting), and the ninth page (security setting) that are marked with a star next to the page number are security-related items.

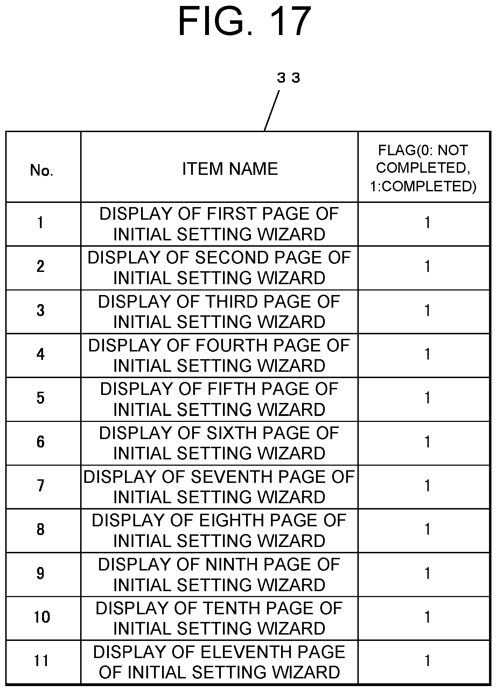

FIG. 17 is a diagram showing an example of a state of the display management table used in the multifunction peripheral according to the fifth embodiment of the present disclosure and showing a state of the display management table after the initial setting wizard is displayed when the power is turned on for the first time after factory shipment. When the power is turned on for the first time after factory shipment, in steps S3 to S15, all the pages of the initial setting wizard are displayed, and the flag values of the flags for all the pages are changed to 1. Thus, in a display management table 33 in FIG. 17, the flag values are all 1.

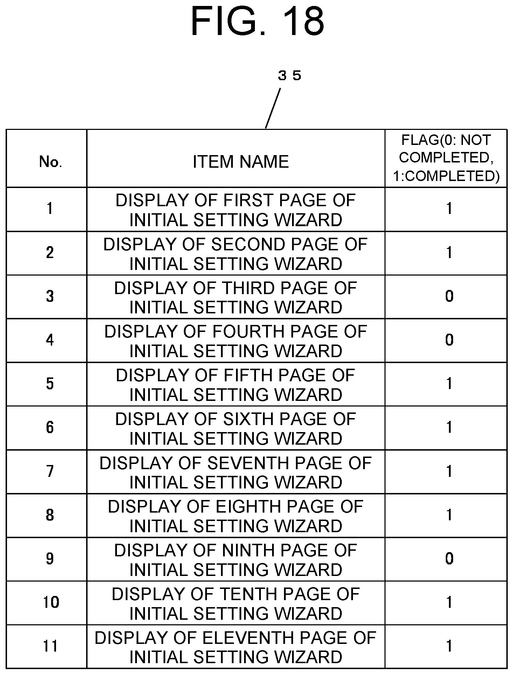

FIG. 18 is a diagram showing an example of a state of the display management table used in the multifunction peripheral according to the fifth embodiment of the present disclosure and showing a state of the display management table after the initial setting wizard initialization process in FIG. 15 is performed. In a display management table 35, the flag values of the flag numbers 3, 4, and 9 respectively corresponding to the third, fourth, and ninth pages of the initial setting wizard are all 0. The flag values of the flags corresponding to the other pages of the initial setting wizard are all 1.

When the main body firmware of the multifunction peripheral 1 is updated, as illustrated in FIG. 10, the initial setting wizard initialization process (step S45) is performed. As shown in FIG. 16, of the 11 pages in total of the initial setting wizard, the third, fourth, and ninth pages are security-related items. Thus, when the display management table 33 in FIG. 17 is stored in the storage 5 and the initial setting wizard initialization process in FIG. 15 is performed, the flag value of the flag number 1 in the state management table is changed to 0 (step S121), and the flag values of the flags for the third, fourth, and ninth pages in the display management table are changed to 0 (step S123). Therefore, the flag values are as shown in the display management table 35 in FIG. 18.

Then, after the controller 3 performs a restart of the main body in step S47, the initial setting wizard display process (step S21) is performed according to the flowchart in FIG. 8. The flag value of the flag number 1 in the state management table has been changed to 0 in step S121, and thus the answer is "Yes" in step S1. In the display management table 35, the flag values of the flags for the third, fourth, and ninth pages (i.e., the flags for the flag numbers 3, 4, and 9) are 0, and the flag values for the other pages are 1; thus, in steps S5 to S15, the third, fourth, and ninth pages of the initial setting wizard are displayed, and the other pages are not displayed.

According to the fifth embodiment, when the main body firmware is updated, the multifunction peripheral 1 displays only the pages for security-related items in the initial setting wizard. This allows a user to check the setting content of the security-related items in the initial setting wizard and change the setting content as needed, when the main body firmware is updated. At this time, a check of the setting content of the items other than the security-related items can be omitted.

### 6. Sixth Embodiment

A sixth embodiment will be described. The following mainly describes only differences in configuration and process from those of the first embodiment. In the sixth embodiment, before the initial setting wizard is redisplayed, a message that provides advance notice of redisplay of the initial setting wizard is displayed.

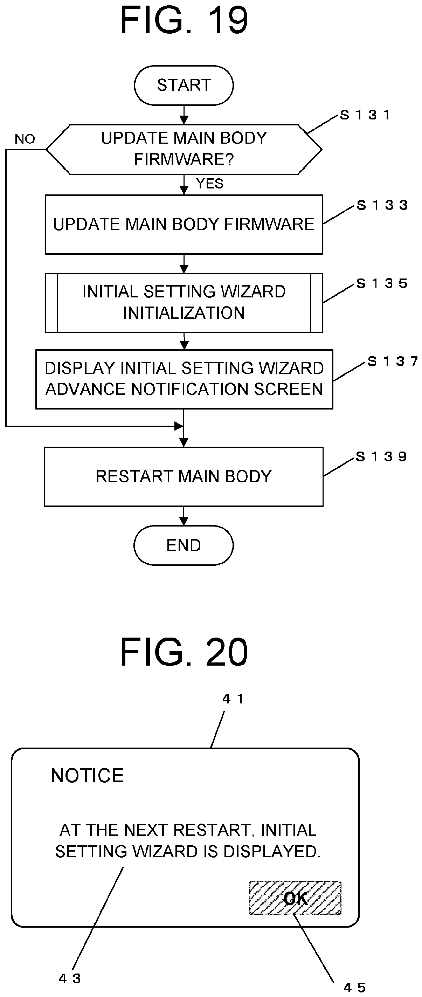

FIG. 19 is a flowchart illustrating a main body firmware update process performed by the multifunction peripheral according to the sixth embodiment of the present disclosure. The main body firmware is the firmware of the multifunction peripheral 1, and is stored in the storage 5.

The controller 3 determines whether to update the main body firmware (step S131). The main body firmware is determined to be updated, for example, when an operation to update the firmware of the multifunction peripheral 1 is received via the operation acceptor 9. Alternatively, the main body firmware may be updated when an update file for the main body firmware is received via the communicator 15 from a file server (not illustrated) that is located on the network and distributes the firmware of the multifunction peripheral 1, and then the update file is stored in the storage 5. Alternatively, the main body firmware may be updated when an update file for the main body firmware is copied from an external storage device connected to the connector 17 and is then stored in the storage 5. Subsequent steps S133 and S135 are the same as steps S43 and S45, respectively, and thus description thereof is omitted.

Next, the controller 3 displays an initial setting wizard advance notification screen on the display 7 (step S137). FIG. 20 is a diagram illustrating an example of the initial setting wizard advance notification screen displayed by the multifunction peripheral according to the sixth embodiment of the present disclosure. An initial setting wizard advance notification screen 41 includes a message 43 and an OK button 45. The message 43 is a message for notifying an operator who operates the multifunction peripheral 1 that the initial setting wizard is displayed at the next restart of the multifunction peripheral 1. The OK button 45 is a button that is operated via the operation acceptor 9. An operator who has read the message 43 operates the OK button 45 via the operation acceptor 9. When the OK button 45 is operated, the controller 3 restarts the multifunction peripheral 1 (step S139).

According to the sixth embodiment, when the initial setting wizard initialization process is performed, and the initial setting wizard is determined to be redisplayed after the next restart of the multifunction peripheral 1, the multifunction peripheral 1 displays the initial setting wizard advance notification screen 41 that provides advance notice of redisplay of the initial setting wizard. This allows an operator to know in advance the reason that the initial setting wizard is redisplayed, before the initial setting wizard is actually redisplayed. As a result, even when the multifunction peripheral 1 performs an unusual operation (redisplay of the initial setting wizard), the operator can respond to the operation without being confused.

### 7. Modifications

The present disclosure is not limited to the embodiments and variations described above, and can be variously modified. That is, an embodiment obtained by combining technical measures modified as appropriate within the scope not departing from the gist of the present disclosure is also included in the technical scope of the present disclosure.

In the embodiments described above, the information processing apparatus of the present disclosure is applied to a multifunction peripheral; however, the information processing apparatus of the present disclosure may be applied to another apparatus. The information processing apparatus may be, for example, an apparatus such as a video device such as a television receiver or a recorder, or a home appliance such as a microwave oven or an air conditioner. Alternatively, the information processing apparatus may be a common information processing apparatus such as a smartphone, a tablet, or a computer. Thus, the information processing apparatus of the present disclosure is preferably applied to an apparatus capable of displaying an initial setting wizard.

Note that the scope of the present disclosure is not limited to the configurations explicitly described in the present specification, and includes any combination of the techniques disclosed in the present specification. In the present disclosure, the configurations to be patented are described in the appended claims. However, it is not intended to exclude configurations from the technical scope on the grounds that the configurations are not described in the claims.

In the present specification, the description including the term "in a/the case of/where" or "when" describes an example, and the configuration is not limited to the described content. A configuration other than the configuration described with the term "in a/the case of/where" or "when" is also disclosed within the scope obvious to those skilled in the art, and it is intended to acquire the right to such a configuration.

The process order and data flow order described in the present specification are not limited to the described orders. For example, a configuration obtained by removing part of the process or switching the order is also disclosed, and it is intended to acquire the right to such a configuration.

In the embodiments, the functions are described to be implemented by the respective devices, but the functions may be implemented by a single device or by further using an external server.

The program operated in each of the devices in the embodiments is a program that controls the CPU and the like (a program that causes a computer to function) to implement the functions of the embodiments described above. Information handled by these devices is temporarily accumulated in a temporary storage device (e.g., a RAM) during processing, is then stored in various storage devices such as a ROM and an HDD, and is read, corrected, and written by the CPU as needed.

A recording medium that stores the program may be any of a semiconductor medium (e.g., a ROM, a non-volatile memory card, etc.), an optical recording medium/magneto-optical recording medium (e.g., a digital versatile disc (DVD), a magneto-optical disc (MO), a Mini Disc (MD), a compact disc (CD), a Blu-ray (registered trademark) disc (BD), etc.), a magnetic recording medium (e.g., a magnetic tape, a flexible disk, etc.), and the like. Furthermore, the functions of the embodiments described above are implemented not only by executing the loaded program, but the functions of the present disclosure may also be implemented by processing in cooperation with an operating system, another application program, or the like, based on the instructions of the program.

For market distribution, the program may be stored and distributed in a portable recording medium or transferred to a server computer connected via a network such as the Internet. In this case, needless to say, a storage device of the server computer is also included in the present disclosure.

### REFERENCE SIGNS LIST

1 Multifunction peripheral
3 Controller
3a Initial setting processor
3b Update setting processor
5 Storage
5a, 21 State management table
5b, 23, 25, 33, 35 Display management table
7 Display
9 Operation acceptor
11 Image inputter
13 Image former
15 Communicator
17 Connector
41 Initial setting wizard advance notification screen
43 Message
45 OK button

## Claims

1. An information processing apparatus (1) comprising:
one or more controllers (3);
a display (7); and
an operation acceptor (9), wherein
the one or more controllers (3) perform
an initial setting process in which at a time of initial startup, a setting screen in a wizard form to receive a setting of a setting value is displayed on the display (7) and an operation performed to set the setting value is received via the operation acceptor (9), and
an update setting process in which when a predetermined condition after the initial startup is satisfied, the setting screen is displayed on the display and an operation performed to update the setting value is received via the operation acceptor (9).

2. The information processing apparatus (1) according to claim 1, wherein
the information processing apparatus (1) is operated according to one of a plurality of security modes, and
the one or more controllers (3) perform the update setting process based on, as the condition, a condition related to a security mode change.

3. The information processing apparatus (1) according to claim 1, further comprising
a storage (5) that stores a firmware, wherein
the one or more controllers perform the update setting process based on, as the condition, a condition related to an update of the firmware stored in the storage (5).

4. The information processing apparatus (1) according to claim 1, wherein
the one or more controllers (3) perform the update setting process based on, as the condition, a condition related to an update of a predetermined setting value.

5. The information processing apparatus (1) according to claim 1, wherein
in the update setting process, when a plurality of predetermined conditions after the initial startup are satisfied, the one or more controllers (3) display the setting screen on the display (7), and receive, via the operation acceptor (9), an operation performed to update the setting value.

6. The information processing apparatus (1) according to claim 1, further comprising
a storage (5) that stores an entire display flag that, in a case where the setting screen is displayed on the display (7) in the update setting process, indicates whether the setting screen has been displayed, wherein
the one or more controllers (3) determine, based on a value of the entire display flag, whether to display the setting screen on the display (7).

7. The information processing apparatus (1) according to claim 6, wherein
the setting screen is composed of N pages, N being a natural number,
the storage (5) further stores one or more page-specific flags each of which indicates whether a corresponding one of the N pages has been displayed, and
in a case where the setting screen is displayed on the display (7) in the update setting process, the one or more controllers (3) determine, based on the value of the entire display flag and a value of each of the one or more page-specific flags, whether to display a corresponding one of the N pages.

8. The information processing apparatus (1) according to claim 1, wherein
when a predetermined condition after the initial startup is satisfied, before the setting screen is displayed on the display (7) in the update setting process, the one or more controllers (3) display, on the display (7), an advance notification screen that provides advance notice of display of the setting screen.

9. A method of controlling an information processing apparatus, the method comprising:
at a time of initial startup, displaying, on a display (7), a setting screen in a wizard form to receive a setting of a setting value and receiving an operation performed to set the setting value; and
when a predetermined condition after the initial startup is satisfied, displaying the setting screen and receiving an operation performed to update the setting value.
